(19) Europäisches Patentamt

European Patent Office

Office européen des brevets

(11) EP 0 396 409 B1

(12) **EUROPEAN PATENT SPECIFICATION**

(45) Date of publication and mention
of the grant of the patent:
**11.03.1998 Bulletin 1998/11**

(51) Int Cl.[6]: **G01N 21/21**

(21) Application number: **90304799.1**

(22) Date of filing: **02.05.1990**

(54) **High resolution ellipsometric apparatus**

Ellipsometrische Vorrichtung mit hohem Auflösungsvermögen

Dispositif d'ellipsométrie à grand pouvoir de résolution

(84) Designated Contracting States:
**DE FR GB NL**

(30) Priority: **19.09.1989 US 409393**
**04.05.1989 US 347812**

(43) Date of publication of application:
**07.11.1990 Bulletin 1990/45**

(73) Proprietor: **THERMA-WAVE, INC. (a Delaware corporation)**
**Fremont, California 94539 (US)**

(72) Inventors:
• **Gold, Nathan**
**Redwood City, California 94065 (US)**
• **Opsal, Jon**
**Livermore, California 94550 (US)**
• **Willenborg, David L.**
**Dublin, California 94568 (US)**
• **Rosencwaig, Allan**
**Danville, California 94526 (US)**

(74) Representative: **Jackson, David Spence et al**
**REDDIE & GROSE**
**16, Theobalds Road**
**London, WC1X 8PL (GB)**

(56) References cited:
**EP-A- 0 150 945       JP-A-63 186 130**
**US-A- 4 210 401**

• **IBM TECHNICAL DISCLOSURE BULLETIN, vol. 31, no. 8, January 1989, Armonk NY, US, pp. 363-368; 'Apparatus and method for film thickness and optical constant determination'**

**Description**

This invention relates to an ellipsometric apparatus for use with a sample, comprising:

means for so directing and focusing a probe beam of radiation having a known polarization state onto the sample that the beam is incident substantially symmetrically with respect to a normal to the surface of the sample; and means for analyzing the polarization state of and detecting a plurality of rays in the probe beam after the beam has interacted with the sample, the analysing and detecting means including a photo detector; the directing and focusing means including a spherical lens for focusing the probe beam, and said analysing means further functioning to determine the angle of incidence with respect to the sample surface of each of a plurality of rays on the basis of the position of the ray in the probe beam.

The invention also relates to an ellipsometric method of use with a sample.

Ellipsometry is a nondestructive technique for studying the physical properties of a sample based on changes induced in the polarization state of a light beam interacting with the sample. In all ellipsometer systems, a light beam having a known polarization state is reflected from or transmitted through the sample. The polarization state of the beam after it interacts with the sample is then measured. The differences in the polarization state of the beam before and after interaction with the sample can be used to calculate parameters of the sample. In the present specification, the term polarization state is intended to mean the respective amplitudes of and phase difference between the p and s polarization components.

The most common form of ellipsometry is reflection ellipsometry where a light beam is directed at an oblique angle of incidence to the sample surface. The polarization state of the reflected beam is measured to derive information about the surface of the material. Common parameters which are studied include the index of refraction and extinction coefficient of the sample. More recently, reflection ellipsometry has been proposed to study carrier densities in a semiconductor wafer (see U.S. Patent No. 4 472 663, issued September 18, 1984 to Motooka). The most common industry use for ellipsometers is in the characterisation of thin film layers on semiconductor samples. Reflection ellipsometry is the best method available for measuring the thickness of very thin layers on semiconductors.

It is also possible to use ellipsometric techniques to analyze a light beam which is transmitted through a sample. This method is referred to as transmission ellipsometry or polarimetry. As in reflection ellipsometry, the polarization state of the incoming beam is compared to the polarization state of the beam after it has passed through the sample. Polarimetry is used to study bulk properties of transparent materials such as the birefringence of crystals. For the sake of simplicity, the discussion in the remainder of this application will be limited to reflection ellipsometry, however the subject invention is applicable to both reflection and transmission ellipsometry.

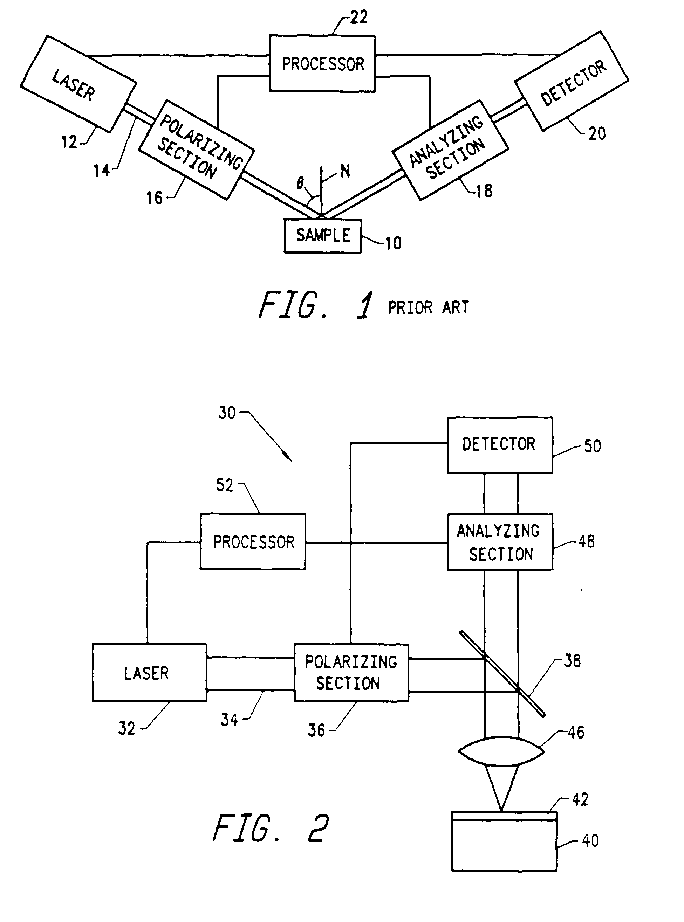

Turning to Figure 1, there is illustrated the basic form of a prior art ellipsometer for evaluating the parameters of a sample 10. As shown therein, a means, such as laser 12, generates a beam of radiation 14. This beam is passed through a polarizing section 16 for creating a known polarization state of the beam. The polarization section 16 can include one or more components which will be discussed below. The beam is then reflected off the sample at an oblique angle of incidence $\theta$ with respect to the normal N as shown in Figure 1. The reflected beam is then passed through an analyzing section 18 for isolating the polarization state of the reflected beam. The intensity of the beam is then measured by a photodetector 20. A processor 22 can then be used to determine parameters of the sample 10 by comparing the polarization state of the input beam with the polarization state of the reflected beam.

There are a wide variety of ellipsometer schemes which have been developed in the prior art. A thorough discussion of many prior art systems can be found in the comprehensive text by R.M.A. Azzam and N.M. Bashara entitled, Ellipsometry and Polarized Light, North Holland Publishing Co., New York, New York, 1977. In the latter text, significant detail is provided as to the various types of optical components which can be used in the polarization and analyzing sections 16 and 18. Due to the non-directional nature of optical laws, the sequence in which these various optical components are disposed may be interchanged. Typically, the components utilized can include a linear or circular polarizer, a birefringent device often referred to as a compensator, and a linear or circular analyzer. In operation, one or more of these elements are rotated about the azimuth in a manner to vary the polarization state of the beam. Information about sample parameters is derived from the photodetector output as it relates to the azimuthal positions of the various elements.

One of the earliest developed ellipsometric methods is called null ellipsometry. In null ellipsometry, the change in state of polarization which is caused by the sample is compensated by suitable adjustment of the polarizing and analyzing sections such that the reflected light beam is extinguished by the analyzing section. More, specifically, the azimuthal angle of the elements are rotated until a null or minimum level intensity is measured by the detector.

In a photometric ellipsometer, no effort is made to extinguish the light reaching the detector. Rather, the level of light intensity recorded by the detector is measured and compared with the azimuth angles of the components in the polarizing and analyzing sections to derive information about the sample. The processor utilizes mathematical models, including Fresnel equations, to determine the sample parameters. As described in detail in the Azzam and Bashara text, the mathematical models typically include a calculation for the "ellipsometric parameters" $\psi$ and $\bar{\delta}$. These parameters are related to the relative magnitudes of the p and s polarization states of the reflected beam as well as the phase delay between those two polarizations by the following equations:

$$(1) \qquad \frac{R_p}{R_s} = \tan \psi e^{i\delta}$$

$$(2) \qquad \tan \psi = \left| \frac{R_p}{R_s} \right|$$

$$(3) \qquad \delta = \arg \left( \frac{R_p}{R_s} \right)$$

There are many other ellipsometric techniques that are found in the prior art and will be mentioned briefly below. One such technique is modulated ellipsometry wherein small changes in the optical parameters of a surface that are induced by an external field are measured. (See, Azzam, page 265.) Another approach is interferometric ellipsometry. (See, Azzam, page 262 and in U.S. Patent No. 4,762,414 issued August 9, 1980 to Grego.) In another approach, the reflected probe beam is split into two or more beams and measured by different detectors. (See, U.S. Patent No. 4,585,384, issued April 29, 1986 to Chastang.)

A new approach is disclosed in U.S. Patent No. 4,725,145, issued February 16, 1988 to Azzam. In the latter patent, the detector is arranged in a manner to simultaneously function as the analyzer section. More specifically, the detector is arranged to be polarization sensitive and has a partially specularly reflecting surface intended to isolate radiation of a certain polarization state. While the approach in Azzam reduces the number of components, the system is still like other prior art devices in that the polarization state of the reflected probe beam must be known. As will be seen below, the subject invention can be used to substantially improve any of the above described ellipsometric methods and apparatus.

Each of the ellipsometric methods described above requires that the incoming beam strike the surface of the sample at an oblique angle of incidence. This is performed by directing the entire beam at an oblique angle with respect to the sample surface and having an independent detection system aligned with the reflected beam for capturing, analyzing and measuring the beam. This approach has some serious limitations. First of all, the beam generation and collection components must be accurately aligned. This alignment must be accurate as to both the angle of incidence and reflection of the beam and the azimuthal angles of the incoming beam. The term azimuthal angle in this sense relates to variations in and out of the plane of the paper of Figure 1, rather than rotation about the direction of travel of the beam which is relevant when discussing the operation of the polarization and analyzing sections. Difficulties with alignment become extremely important in multiple angle of incidence ellipsometers which will be discussed in greater detail below.

As can be appreciated, alignment problems, while raising issues of complexity and cost, can at least be addressed. A more significant problem arises from the need to direct the beam at an oblique angle of incidence which effectively limits spatial resolution. As used herein, resolution is intended to be a measure of the smallest area within which information can be derived. In the manufacturing of semiconductor devices, information about layer thicknesses within extremely small areas is extremely desirable. However, because of the need to direct the beam at an oblique angle of incidence, it is impossible to tightly focus the beam using high numerical aperture optics. Significant efforts have been made to improve the resolution of ellipsometers, but to date, spot sizes below 25 microns cannot be reliably achieved. As will be discussed below, the subject invention overcomes this problem and permits measurement of spot sizes on the order of 1 micron. Furthermore, the subject approach is self-aligning thereby substantially simplifying the measurement procedure.

There are a number of parameters which are used to define a semiconductor sample having a dielectric layer coated thereon. These parameters include the index of refraction and extinction coefficients of the air, thin-film layer and substrate, as well as the thickness of the thin-film layer. In practice, the extinction coefficients of the air and thin-film layer are negligible. However, this still leaves five sample parameters which can be unknown. In the ellipsometric devices described above, only two quantities $\psi$ and $\delta$ are measured and therefore only two of the five parameters can be ascertained such that the other three parameters must be known. In order to solve for more of the unknowns, additional independent measurements must be taken.

In the prior art, the need to obtain additional independent measurements has been addressed with multiple angle of incidence devices. (See, Azzam, page 320) In these devices, the angle of incidence of the beam is changed by varying the angular position of the laser generating components. Measurements are then taken at multiple angles of incidence. The multiple independent measurements allow additional unknown sample parameters to be calculated. Alternatively, the additional independent measurements can be used to calculate the unknown parameters with greater accuracy.

One of the drawbacks of multiple angle of incidence devices is that in order to measure the reflected beam, the angle of the detection components must also be similarly adjusted to capture the reflected beam. As can be appreciated, the need to adjust the position of all of the components makes accurate alignment even more difficult. As will be seen below, another important advantage of the subject invention is that multiple angle of incidence ellipsometry can be performed without adjusting the position of the beam generation or collection components.

Another problem with multiple angle of incidence devices is that they cannot be used to measure relatively shallow angles of incidence. As the thickness of the thin film increases, information from these shallow angles becomes of greater significance. As can be seen in Figure 1, in order to obtain shallower angles of incidence, the light generating and collecting elements must be rotated up toward each other. The physical size and location of these components will make detection of angles of incidence of less that 20° quite difficult. As will be discussed below, an ellipsometer formed in accordance with the subject invention can measure multiple angles over a wide range, from 70° down to and including 0°.

In IBM Technical Disclosure Bulletin, Vol. 31, No. 8, January 1989, at pages 363 to 368, there is described an apparatus and method for film thickness and optical constant determination. The apparatus includes a laser generating a beam of narrow band, polarized and collimated radiation which is focused at the surface of a sample consisting of a thin film layer on a substrate by a low f/number cylindrical lens arranged substantially symmetrically with respect to a normal to the surface of the sample at the thin film layer. The cylindrical lens creates in a predetermined plane a spread of angles of incidence at a normal to the thin film layer surface. Radiation reflected by the thin film layer back through the lens is collimated by the lens and directed onto a diode array in which each diode measures radiation from a small angular range and the reflectivity as a function of angle is obtained directly from the output of the array. The output of the array is supplied to signal processing means for determining the thin film layer thickness, the real part of the refractive index of the material of the thin film layer, and the imaginary part of the refractive index from reflectivity versus angle of incidence curves for S and P- polarization reflectivities.

EP-A-0 150 945 describes an apparatus and a method for measuring the thickness of a transparent film on a substrate, in which a circularly polarised beam is passed through a polarization plate mounted in a hollow shaft of a motor that rotates the shaft at a fixed rate so as to produce a beam having a continuously varying polarization angle. This beam is passed through a beam splitter that produces five such output beams. These five beams are parallel and are passed through a condensing lens to focus at a point on the surface of the thin film. It is arranged that the principal axis of the lens is at an angle to the normal at the film surface and that all five incident beams lie in the same plane of incidence. Because the plane of polarization rotates continuously, the component of the incident light polarized parallel to the plane of incidence varies cyclically between a maximum and zero. Similarly, the component of the incident light polarized perpendicular to the plane of incidence varies cyclically between a maximum and zero. These maxima and zeros are out of phase so that the maximum of one component occurs at the same time as the zero of the other component. Since the reflectivities for the two components are different, the reflected light varies cyclically between a maximum corresponding to the maximum of one component and a minimum corresponding to the maximum of the other component. A linear array of detectors is arranged to sense the five reflected beams and is coupled to a microprocessor based apparatus that senses and compares the maxima and minima in the reflected beams to determine the thickness of the film.

Accordingly, it is an object of the subject invention to provide a new and improved ellipsometer configuration which is suitable for enhancing performance of all existing systems.

It is still another object of the subject invention to provide a new and improved ellipsometer with enhanced resolution.

It is still a further object of the subject invention to provide a new and improved ellipsometer which is self-aligning.

It is still another object of the subject invention to provide a new and improved ellipsometer which can provide multiple angle of incidence measurements without actively changing the angle of incidence the incoming beam.

It is still another object of the subject invention to provide a new and improved ellipsometer which is capable of determining multiple unknown parameters of a sample.

Japanese laid-open patent application no. 63-186130 describes an ellipsometric apparatus of the kind defined hereinbefore at the beginning in which a beam from a laser is directed vertically down through, in sequence, a collimating lens, a polarizer, a quarter wave plate, a 45° half mirror, and a spherical focusing lens with a centrally disposed circular light stop disk. The focused laser beam irradiates a film on a substrate. The axes of the lenses are collinear and are normal to the surface of the film. Rays reflected from the film pass up through the focusing lens and are reflected by the 45° half mirror through an analyzer. An annular stop or pupil selects a bundle of rays from the annular reflected beam emerging from the analyzer, and these selected rays are converted into electrical signals by a photodetector. The photodetector shown is described as being in the form of a photodiode array positioned concentrically around the beam path. As an alternative photodetector there is proposed a photodiode array positioned two dimensionally to allow different angles of incidence to be measured simultaneously.

According to the present invention, an ellipsometric apparatus of the kind defined hereinbefore at the beginning is characterised in that the said spherical lens has a numerical aperture of at least 0.5 and is arranged to create a spread of angles of incidence with respect to the sample surface including the axial ray and all rays from the said axial ray out to at least 30° from the axial ray in two orthogonal axes; in that the analysing and detecting means includes a further lens for imaging the interacted beam on the photodetector and is such that the said plurality of rays includes the axial ray and corresponds to a plurality angles of incidence up to at least 30° from the normal to the surface of the sample; and in that

a processor means is provided for evaluating parameters of the sample based on the polarization state detected by said analysing and detecting means of each of the said plurality of rays.

The present invention also provides an ellipsometric method of use with a sample, comprising the steps of:

directing and focusing through a spherical lens a probe beam of radiation having a known polarization state towards the surface of the sample so as to create a spread of angles of incidence with respect to the sample surface with the beam incident substantially symmetrically with respect to a normal to the surface of the sample;
gathering with said spherical lens a plurality of rays in the probe beam after the beam has interacted with the sample;
analysing the polarisation state of and detecting the gathered rays; and
determining the angle of incidence with respect to the surface of the sample of each of the plurality of rays on the basis of the position of the ray in said probe beam, characterised by using as said spherical lens a lens with a numerical aperture of at least 0.5 in such a manner as to tightly focus the probe beam and create a spread of angles of incidence with respect to the sample surface including the axial ray and all rays from the said axial ray out to at least 30° from the axial ray in two orthogonal axes;
and
evaluating parameters of the sample based on the polarization state of each of the said plurality of rays, the said plurality of rays including the axial ray and corresponding to a plurality of angles of incidence up to at least 30° from the normal to the surface of the sample; and in that
the step of analysing and detecting includes imaging the interacted beam on a photodetector (50) by means of a further lens (336).

Where a means is used for creating the known polarization state of the probe beam, such means can be any of those found in the prior art.

Unlike the devices found in the prior art, wherein the probe beam is directed at an oblique angle to the sample, in the preferred embodiment the probe beam is directed substantially normal to the surface of the sample. The embodiment further includes a high numerical aperture lens for tightly focusing the probe beam to a relatively small spot on the surface of the sample. This tight focusing of the beam creates a spread of angles of incidence with respect to the sample surface of individual rays within the focused probe beam. The apparatus also includes a means for analyzing the polarization state of the probe beam after it has interacted with the sample. The means for analyzing the polarization state can include any of the components known in the prior art.

In addition to the known components, the analyzing means further includes a detector which functions to determine the angle of incidence with respect to the sample surface of various rays within the incident probe beam. The angle of incidence of these rays will depend on the radial position of the rays within the reflected probe bean. More specifically, the rays in the center of the beam represent the lowest angles of incidence while the radially outer rays within the reflected probe beam correspond to progressively higher angles of incidence. By comparing the polarization state of the incoming beam with that of the beam after it interacts with the sample, in relation to the angle of incidence, various parameters of the sample can be determined.

The approach used herein generates a high spread of angle of incidence without sacrificing the ability to tightly focus the beam. Moreover, the spread of angles of incidence allows multiple angle of incidence measurements to be made without adjusting the position of the components. Furthermore, since the reflected probe beam comes back up from the sample through the same focusing optics, the system is essentially self-aligning.

The concept of utilizing a high numerical aperture lens to gain high resolution as well as a large spread of angles of incidence with respect to the surface of the sample is also disclosed in European patent application no. 90304800.7, publication no. 0 397 38

In the device disclosed therein, the intensity of the reflected beam is measured as a function of the angle of incidence with respect to the surface of the sample to give information about film thickness. The latter case relies on the interference effects created when the beam is reflected off the sample. In contrast, in the subject invention, the change in polarization state induced in the beam as it reflects from the sample surface is measured. Accordingly, in the device described in the above mentioned application, no specific measurement of the polarization state of the reflected beam was made.

The accuracy of measurement of the parameters of the sample in an embodiment of the present invention can be enhanced if the total reflected power of the probe beam is also measured. More specifically, it is known that the reflectivity of the surface of the sample will vary approximately sinusoidally as the thickness of the thin-film layer varies. Thus, unless the layer thickness is known to some degree, a specific thickness measurement cannot be derived from a reflectivity measurement alone since any specific measurement would be consistent with a number of different layer thicknesses. These ambiguities can be removed if a very good approximation of layer thickness is first made using an ellipsometric approach as described above. Once the ellipsometric measurement is made, additional data taken by measuring the total reflected power of the beam can be used to refine the measurement of layer thickness. This added sensitivity is a result of the fact that the signal to noise ratio of the measurement of the full power of the beam will be much better than the measurement where only portions of the beam, at discrete points corresponding to a specific angle of incidence are measured.

Further objects and advantages of the subject invention will be apparent from the following detailed description taken in conjunction with the drawings in which:

## Brief Description of the Drawings

Figure 1 is a simplified block diagram of a generalized form of a prior art ellipsometer device.

Figure 2 is a simplified block diagram of an ellipsometer device formed in accordance with the subject invention.

Figure 3 is a diagram of a focused probe beam enlarged with respect to Figure 1.

Figure 4 is a plan view of the surface of a photodetector which can be used to carry out the method of the subject invention.

Figure 5 is a diagram illustrating the relationship between the reflected rays and the photodetector.

Figure 6 is a diagram of a test sample defined by a silicon semiconductor wafer having a thin film silicon dioxide layer on the surface.

Figure 7 is a schematic diagram of the preferred embodiment of the subject invention.

## Detailed Description of the Preferred Embodiments

Referring to Figure 2, there is illustrated in schematic form, the basic apparatus 30 for carrying out the method of the subject invention. Apparatus 30 includes a laser 32 for generating a probe beam of radiation 34. The probe beam is passed through a polarization section 36 which can include any of the components known in the prior art. For example, polarizing section 36 can include a linear or circular polarizer and a birefringent quarter wave plate compensator. As is well known, certain lasers themselves are designed to emit light of a known polarization. Such a laser might be used to eliminate the need for a separate polarizer section 36. In either case, the combination of the laser and polarization section must result in a known polarization state for the probe beam 34.

After passing through the polarization section 36, the probe beam is reflected downward by a beam splitter 38 towards the sample 40 having a thin, optically transmissive film layer 42 thereon. As illustrated in Figure 2, the beam is directed substantially normal to the surface of the sample. In accordance with the subject invention, beam 34 is tightly focused on the surface of the sample 40 with a high numerical aperture lens 46.

After the probe beam reflects off the surface of the sample it is reflected back up through beam splitter 38 into analyzer section 48. Once again, analyzer section 48 can include any of the components found in the prior art. For example, these components can include linear or circular polarizers and linear or circular analyzers. In a null ellipsometer configuration, the function of the polarization section and analyzing section is to introduce equal and opposite phase shifts to those caused by the reflection at the sample surface. By properly adjusting the components, the light reaching detector 50 can be minimized. Information about the position of the elements in the polarizing section and the analyzing section are supplied to a processor 52 for calculation of sample parameters by the methods used in the prior art. In a photometric approach, signal minimization is not required, and the output of the photodetector is compared with the azimuth angles of the various components in the polarization section and analyzer sections.

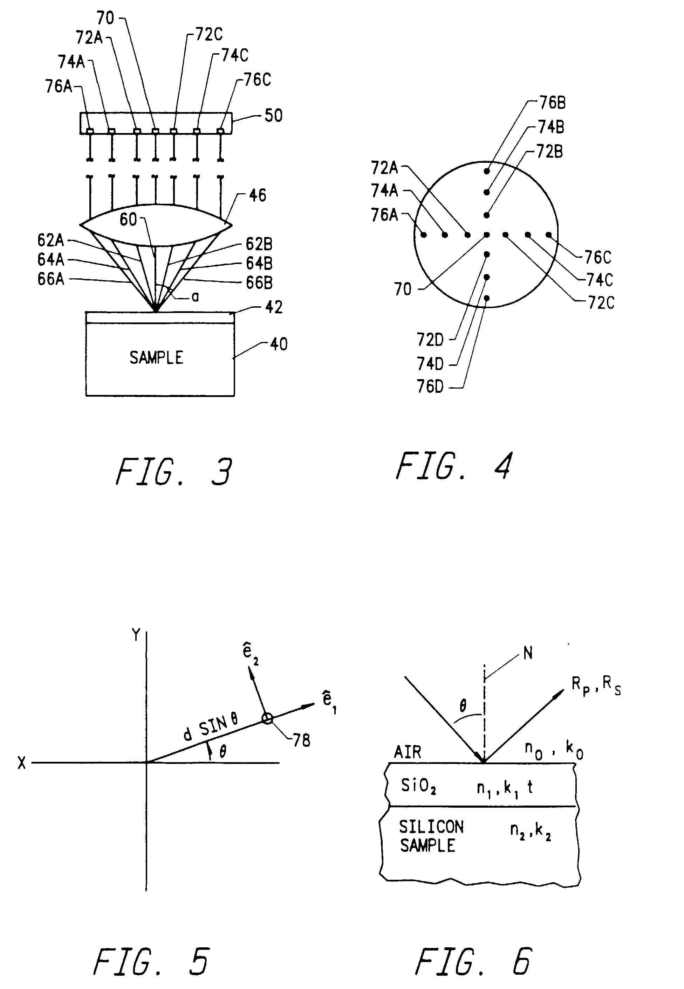

In accordance with the subject invention, the detector and processor are arranged such that information about the angle of incidence with respect to the sample surface of rays within the incident probe beam are determined based on the radial position of the rays within the reflected probe beam. The ability to extract this information can be appreciated by reference to Figures 3 and 4.

Figure 3 illustrates lens 46 focusing the probe beam 34 on the sample 40. The reflected beam is shown impinging on detector 50. It should be noted that in Figure 3, the beam splitter 38 and the analyzer section 48 have been omitted for clarity.

Figure 3 also illustrates individual rays within the incident focused probe beam. As can be seen, where the beam 34 is directed substantially normal to the surface of the sample, the incident focused beam will include a center ray 60 substantially normal to the surface of the sample. The focused beam will also include outer rays 66A and B having a maximum angle $\theta_m$ of incidence with respect to the surface of the sample. (In three dimensions, rays 66A and B correspond to a cone of light.) The angle of incidence of the outer rays 66 are dependent upon the numerical aperture of lens 46. This maximum angle $\theta_m$ is given by the following equation:

$$(4) \qquad \sin \theta_m = \text{(numerical aperture)}.$$

Thus, the location of any ray in the reflected probe beam corresponds to the sine of the angle of incidence of the associated ray in the focused incident probe beam. For example, symmetric rays 64A and B illustrate an angle of 30° while symmetric rays 62A and B represent an angle of incidence of 15°.

Lens 46 is selected to have a high numerical aperture thereby maximizing the spread of angles of incidence. In practice, a lens creating a spread of angles (from the center ray to the outermost ray) of at least 30° is desired. A lens having a numerical aperture of 0.5 will provide such a spread of rays. In the preferred embodiment, a lens having a . 95 numerical aperture is used which gives a spread of greater than 70°.

As noted above, after the beam reflects off the surface of the sample it is directed back up through the lens 46 to photodetector 50. The surface of photodetector 50 is shown in cross section in Figure 3 and in plan in Figure 4. Photodetector 50 includes a plurality of individual discrete detecting elements the outputs of which can be supplied to processor 52.

In accordance with the subject invention, the detector 50 and processor 52 function to measure the intensity of the reflected probe beam as a function of the angle of incidence of rays within the focused incident probe beam. This result can be appreciated through an optical pathway analysis illustrated in Figures 3 and 4. As can be seen, the center element 70 of detector 50 will receive and measure the light intensity of ray 60 passing through the center of lens 46. Accordingly, the output of detector element 70 will correspond to a ray having an angle of incidence of 0°. The radially outer elements 76 A-D on detector 50 receive and measure the light intensity of rays 66A and B which have the greatest angle of incidence. As noted above, this angle of incidence is known based upon the numerical aperture of lens 46. Discrete elements 72 A-D and 74 A-D correspond to angles of incidence between 0° and the highest angle. In the illustrated embodiment elements 74 A-D are located in a manner to receive and measure rays 64A and B having an angle of incidence of 30° while discrete elements 72 A-D are located in a manner to receive and measure rays 62A and B having angle of incidence of 15°.

In the most basic form of the subject invention, information about parameters of the sample can be calculated based on a single angle of incidence measurement. In this case, it is only necessary to take measurements at one radial position within the beam. Thus, for example, if an angle of incidence of 30° is selected, the detector can be limited to having discrete elements at one or more radial locations as illustrated by elements 74. Clearly, if more elements having that radius are provided, the accuracy of the measurement obtained by the system can be enhanced.

The mathematical approach used in analyzing the subject system will be explained below with reference to Figure 5. Figure 5 illustrates a coordinate system in the plane of detector 50 which defines the polarization state of a circularly polarized beam incident on the sample. Element 78 represents one detector element located at a point d sin θ where d is the working distance of the lens 46 and θ is the angle of incidence of the reflected ray.

With circularly polarized light $[(E_0 (\hat{e}_x + i\hat{e}_y)]$ focused onto a reflecting surface through an objective with a working distance d, the spatially dependent reflected electric field $E_R (\theta,\phi)$ after passing back up through the objective can be written in the form:

$$(5) \qquad E_R(\theta,\phi) = E_0 \, e^{i\phi}[\hat{e}_1 \, R_p + i \, \hat{e}_2 \, R_s]$$

where $E_0$ is the amplitude of the incident field, $\hat{e}_1$ and $\hat{e}_2$ are unit vectors along the axes depicted in Figure 5, $R_p$ is the complex p-wave amplitude reflection coefficient and $R_s$ is the complex s-wave amplitude reflection coefficient. $R_p$ and $R_s$ are functions of the angle $\theta$ and independent of $\phi$.

In terms of the ellipsometric parameters $\psi$ and $\delta$ we have for this reflected field

$$(6) \qquad E_R = E_0\, R_s\, e^{i\phi}[\hat{e}_1\, \tan\psi\, e^{i\delta} + i\hat{e}_2]$$

where

$$\frac{R_p}{R_s} = \left|\frac{R_p}{R_s}\right| e^{i\delta}$$

defines $\delta$
and

$$\tan\psi = \left|\frac{R_p}{R_s}\right| .$$

If we pass the reflected beam through a linear polarizer oriented along the x-axis, then the measured signal, $S_x$, is given by:

$$(7) \qquad S_x = \frac{1}{2}\left|R_s\right|^2 [\tan^2\psi + 1 + (\tan\psi^2 - 1)\cos2\phi + 2\tan\psi\,\sin\delta\,\sin2\phi]$$

which is periodic in $2\phi$. This general expression can be simplified if actual measurements are taken at different angles $\phi$. These measurement could be made by rotating the detector so that the angle $\phi$ is changed. As will be discussed below, with reference to the preferred embodiment, the optically equivalent effect can be achieved in a simpler fashion by passing the beam through a rotating polarizer.

In order to derive the first ellipsometric parameter $\psi$, measurements can be taken at $\phi = 0$ and $\phi = \pi/2$. The measured signal at $\phi = 0$ is defined as follows:

$$(8) \qquad S_x(0) = \left|R_s\right|^2\tan^2\psi = \left|R_p\right|^2$$

The measured signal at $\phi = \pi/2$ is given by:

$$(9) \qquad S_x(\pi/2) = \left|R_s\right|^2$$

and therefore the value for $\psi$ is

$$(10) \qquad \tan^2\psi = \frac{s_x(o)}{s_x(\pi/2)}$$

In order to derive $\delta$, we two additional measurements can be taken at $\phi = \pi/4$ and at $\phi = -\pi/4$. At $\phi = \pi/4$, the measured signal is given by:

$$(11) \qquad S_x(\pi/4) = \frac{1}{2}\left|R_s\right|^2 [\tan^2\psi + 1 + 2\tan\psi\,\sin\delta]$$

and at $\phi = -\pi/4$ the measured signal is given by:

$$(12) \qquad S_x(-\pi/4) = \frac{1}{2}\left|R_s\right|^2 [\tan^2\psi + 1 - 2\tan\psi\,\sin\delta]$$

Taking the difference between equations 11 and 12 we obtain:

$$(13) \qquad S_x(\pi/4) - s_x(-\pi/4) = 2\left|R_s\right|^2 \tan\psi\,\sin\delta$$

and taking the sum of equations 11 and 12 we obtain:

$$(14) \qquad S_x(\pi/4) + s_x(-\pi/4) = |R_s|^2 [\tan^2\psi + 1]$$

and consequently $\delta$ can be expressed as:

$$(15) \qquad \sin \delta = \frac{S_x(\pi/4) - S_x(-\pi/4)}{S_x(\pi/4) + S_x(-\pi/4)} \left[ \frac{(\tan^2\psi + 1)}{2 \tan \psi} \right]$$

Since the value for $\psi$ has been obtained with the first two measurements using equation 10, $\delta$ can be calculated using equation 15 and the second two measurements. By using lock in detection and passing the reflected beam through a rotating linear polarizer, highly accurate measurements of the ellipsometric parameter $\psi$ and $\delta$ can be made. In addition, the $\theta$ dependence provides a certain spectroscopic capability due to the variation of optical path length with varying $\theta$ as discussed below.

As noted above, multiple-angle-of-incidence (MAI) measurements is one method of increasing the number of independent ellipsometric measurements. In the Air-$SiO_2$-Si system shown in Figure 6, for example, there are in general seven parameters that may need to be measured ($n_0$, $k_0$, $n_1$, $t$, $k_1$, $n_2$, $k_2$; where n and k are the real and complex components of the refractive index and t is the film thickness). In practice, $k_0$ and $k_1$ are negligible so that for this system only five parameters must be calculated. However, in a single-angle-of-incidence measurement we obtain only two quantities; $\psi$ and $\delta$, and therefore can measure only two of the five parameters. By varying the angle of incidence $\theta$, additional ellipsometric information is obtained and all five of the parameters in the Air-$SiO_2$-Si system can be measured. For very thin films (less than 100Å), some care is required in choosing the incident angles in order to obtain independent information and for optimal measurement, the number of angles chosen should be large enough to offset the effects of noise in the data.

In the subject configuration, measurements at different angles of incidence are obtained by detecting rays at different radial positions within the reflected probe beam. The relationship between the location of the detector elements with the angle of incidence of rays within the probe beam with respect to the sample surface is defined during calibration of the instrument. When using a numerical aperture lens of 0.95, angles from 0° to 70° are readily accessible and consequently the ellipsometric information necessary to correctly characterize the Air-$SiO_2$-Si system is available. It should be noted that this full spread of angles is accessible without adjusting the position of the probe beam generating or collecting components.

A difficulty encountered in the traditional MAI ellipsometers is that the measurement of the substrate optical properties becomes increasingly difficult as the film thickness increases (thickness greater than 1000Å). To overcome this problem, the spectroscopic aspects of the MAI measurements can be utilized. This approach is not true spectroscopy since the wavelength of the probe beam is not changing. However, variations do occur in optical phase as the beam passes through the $SiO_2$ layer with varying angles of incidence that is equivalent to changing the wavelength at a fixed angle of incidence. The optical phase $\Phi$ as a function of $\theta$ can be written as

$$(16) \qquad \Phi(\theta) = \frac{4\pi n_1 t}{\lambda(\theta)}$$

where

$$(17) \qquad \lambda(\theta) = \frac{\lambda_0}{\sqrt{1 - (\frac{n_0}{n_1} \sin \theta_0)^2}}$$

and $\lambda_0$ is the fixed wavelength of the laser.

At 70° with $n_0 = 1$, $n_1 = 1.46$

$$(18) \qquad \lambda\,(70) = 1.31\,\lambda_0$$

so that with $\lambda_0 = 6328\text{Å}$ the effective range of wavelength is between 6328 - 8290Å.

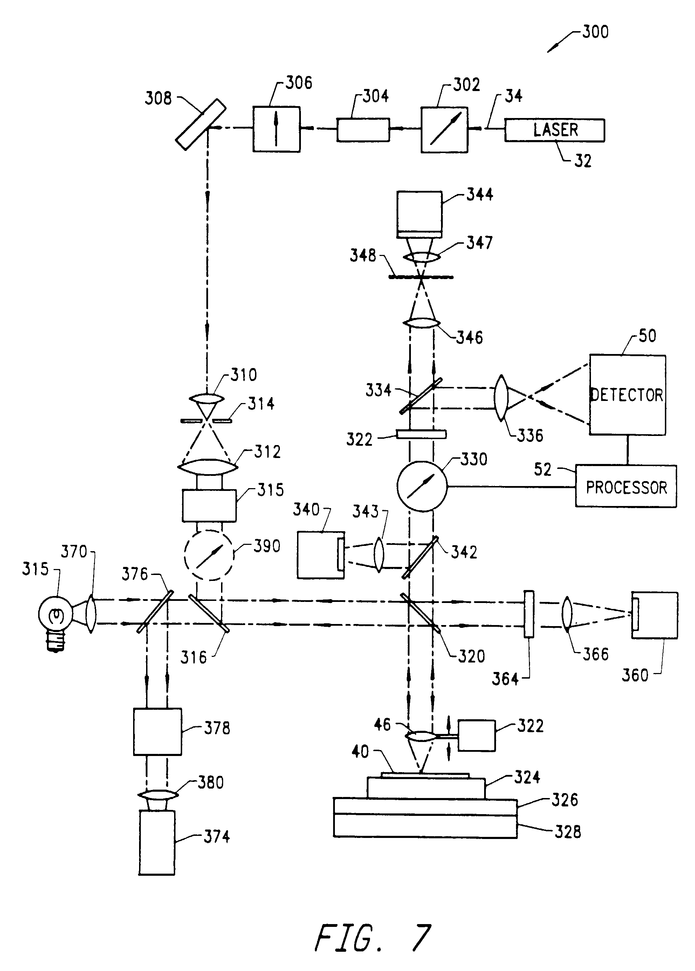

Having described the basic theory and operation of the subject's invention, one preferred apparatus 300 for carrying out the measurements will be described with reference to Figure 7. In Figure 7, parts equivalent to the structure shown in Figures 2 through 4 are numbered the same. Figure 7 illustrates the optical pathways of the apparatus. It should be noted that the components shown in Figure 7 herein are quite similar to those described in applicants' prior pending application Serial No. 07/347,812, filed May 4, 1989. The principle difference is the presence of additional components for varying and isolating the polarization state of the reflected probe beam.

As noted above, laser 32 generates an output beam 34. Laser 32 can be a linearly polarized helium neon laser having a 5 milliwatt power output and a polarization oriented at 45°. Beam 34 could also be generated by a semiconductor diode laser. Beam 34 is passed through a polarizing filter 302 oriented at 45° to insure only 45° polarized light is transmitted. This light is then passed through a faraday rotator 304 for rotating the polarization an additional 45° to prevent spurious reflected helium neon radiation from being reflected back into the helium neon laser. This arrangement reduces instabilities in the power output of the laser caused by spurious reflected HeNe radiation. Beam 34 is then passed through a polarizing filter 306 oriented at 90° to further reduce spurious reflected radiation from going back into the laser.

The beam 34 is then reflected downward by a 95% metallic coated glass turning mirror 308 and into a beam expander/spatial filter arrangement. This arrangement includes an input lens 310 and an output lens 312. A pin-hole filter 314 is provided to improve the beam profile and its uniformity. The beam that exits lens 312 is expanded by the ratio of the focal lengths of lens 310 and lens 312.

In accordance with the subject invention, a component 315 is provided which defines the polarizing section 36 of Figure 2. In the illustrated embodiment, component 315 is defined by a fixed, birefringent quarter wave plate which converts the linear polarized light into circularly polarized light. This element is often referred to in the ellipsometric texts as the compensator.

The circularly polarized beam 34 is then turned with a metallic coated glass beam splitter 316 having an 20% transmission and 80% reflection. This beam splitter is used to combine the HeNe probe beam and white light from source 318. The white light is used to image the sample using a vision system described in greater detail below.

The probe beam is then directed downward towards the sample by a metallic coated glass beam splitter 320 having a 60% transmission and 40% reflection. This beam splitter also functions to turn the white light down towards the sample. Upon return from the sample, part of the probe beam passes up through the splitter 320 and will be collected by the detector 50. Some of the white light from source 318 will be reflected back to the vision system.

The probe beam is focused on the sample through the objective lens 46. Lens 46 has a high numerical aperture so the various rays in the focused beam will have a wide spread of angles of incidence. In the preferred embodiment, lens 46 has a numerical aperture of .95 generating a spread of angles of incidence of greater than 70 °. The position of lens 46 is controlled by an autofocus mechanism 322. As noted above, beam 34 is focused to a spot size less than 1 micron in diameter on the surface of sample 40. The sample 40, which may be a silicon semiconductor with a thin film oxide layer, is mounted on a stage which provides X, Y and rotational positional movement. The top stage 324 provides rotational movement as well as a vacuum chuck for holding down the wafer. Stages 326 and 328 provide X and Y linear movement.

Light from the HeNe probe beam and white light that is reflected from the sample passes through beam splitter 320 into the analyzing section of the subject ellipsometer. In the preferred embodiment, the component 330 of the analyzer section is defined by a rotating polarizing filter. Rotating polarizing filter 330 functions to select the polarization axis to be sampled by the detector 50. The polarization orientation selection occurs at twice the rotation rate of the rotating filter.

The continued transmission of white light past filter 330 is restricted by a band pass filter 332 which transmits only the 633 nm HeNe wavelength radiation. A portion of the HeNe probe beam is then redirected by a metallic coated glass beam splitter 334 to beam profile detector 50. Beam splitter 334 has a 20% transmission and an 80% reflection. The reflected light from beam splitter 334 is expanded by lens 336 and imaged on detector 50. Detector 50 can be defined by a diode array, CCD camera, scanning pin-hole or fiber optic sensor array. Preferably, detector 50 has detector elements which are radially positioned in a two-dimensional array in a manner to extract information about reflected rays at specific angles of incidence. The output of detector 50 is supplied to the processor 52. Information about the azimuthal position of rotating polarizing filter 330 is also supplied to the processor. As noted above, the effect of rotating the linear polarizer is optically equivalent to rotating the detector so that the ellipsometric parameters can be derived as discussed above. The actual calculations will depend on the particular polarizing components that are selected.

As mentioned above, the accuracy of the thickness measurement can be further enhanced by measuring the full power of the reflected probe beam. In the embodiment illustrated in Figure 7, a separate, single cell photodetector 340 is provided for that purpose. A small portion of the probe beam is directed to the detector 340 by metallic coated glass beam splitter 342. A lens 343 can be used to image the full beam onto the surface of the detector 340. In this manner, the probe beam will underfill the detecting surface so that the full power of the beam can be measured.

In the illustrated embodiment, an autofocus mechanism is provided. Autofocus mechanism includes a bi-cell photodetector 344 and a chopper wheel or moving Foucault knife edge 348. An autofocus lens 346 is provided for focusing the probe beam onto the chopper wheel 348. An autofocus field lens 347 can also be provided. Autofocusing using these types of components is known in the art.

In order to insure proper calibration, the output power of the laser 32 must be monitored. This result is achieved using a detector 360 upon which a part of the probe laser beam 34 is directed. A band pass filter 364 is provided to remove white light from the HeNe probe beam. Lens 366 is used to image the beam onto detector 360.

In the illustrated embodiment, apparatus 300 includes a vision system to allow the operator to locate points on the sample. The vision system includes a white light source 318 and a collimating lens 370. A portion of the white light returning from the sample is directed downward to a camera 374 by a 50/50 beam splitter 376. Some form of filter 378 can be provided to control the amount of HeNe probe beam radiation falling on the video camera. Lens 380 focuses the image of the sample onto the camera.

The basic operation of the apparatus 300 is the same as set forth above with respect to Figures 2-4. The detector 50 and processor 52 function to measure the intensity of the reflected probe beam as a function of the angle of incidence of the rays in the incident focused probe beam based on the radial location of the rays within the reflected beam. Multiple angle of incidence measurements can also be taken. Calculations of sample parameters are based on the measured light intensity and the azimuthal position of the rotating polarizing filter. The calculations can be refined by measuring the full power of the reflected probe beam measured by detector 340 in the manner described in applicants prior application Serial No. 07/347,812.

The preferred embodiment illustrated in Figure 7 can be easily modified to correspond to other known ellipsometric approaches. For example, the polarizing section can be expanded with the addition of a rotating polarizing filter 390 (shown in phantom). Filter 390 would function to pass only linearly polarized light whose polarization is oriented with the transmission axis of the rotating polarizing filter. The frequency of rotation of the polarization axis is twice the rotation rate of the rotating filter.

As can be appreciated, the preferred embodiment utilizes a photometric ellipsometric approach. It is within the scope of the subject invention to arrange the polarizer and analyzer sections to perform null ellipsometry. It is also within the scope of the subject invention to combine the detector and analyzer sections as taught by U.S. Patent 4,725,145 to Azzam, cited above.

In summary, there has been disclosed a new ellipsometric method and apparatus which provides greatly enhanced spatial resolution. As described above, a probe beam, having a known polarization state, is tightly focused and directed substantially normal to the surface of the sample. The polarization state of the probe beam is analyzed after it interacts with the sample. In addition, the angle of incidence of at least one ray in the reflected probe beam is determined based on the radial position of that ray within the reflected beam. Multiple angle of incidence measurements can be made by using a plurality of rays within the reflected beam at different radial positions.

While the subject invention has been described with reference to the preferred embodiments, various other changes and modifications could be made therein by one skilled in the art without varying from the scope of the subject invention as defined by the appended claims.

## Claims

1. An ellipsometric apparatus for use with a sample, comprising:

   means (32, 36, 38, 46) for so directing and focusing a probe beam of radiation having a known polarization state onto the sample that the beam is incident substantially symmetrically with respect to a normal to the surface of the sample; and
   means (48,50) for analysing the polarization state of and detecting a plurality of rays in the probe beam after the beam has interacted with the sample, the analysing and detecting means including a photodetector (50); the directing and focusing means including a spherical lens (46) for focusing the probe beam, and said analysing means (48, 50) further functioning to determine the angle of incidence with respect to the surface of the sample of each of a plurality of rays on the basis of the position of the ray in said probe beam, characterised in that the said spherical lens (46) has a numerical aperture of at least 0.5 and is arranged to create a spread of angles of incidence with respect to the sample surface including the axial ray and all rays from the said axial ray out to at least 30° from the axial ray in two orthogonal axes;
   in that the analysing and detecting means (48,50) includes a further lens (336) for imaging the interacted beam on the photodetector (50) and is such that the said plurality of rays includes the,axial ray and corresponds to a plurality of angles of incidence up to at least 30° from the normal to the surface of the sample; and <u>in that</u> a processor means (52) is provided for evaluating parameters of the sample based on the polarization state detected by said analysing and detecting means (48,50) of each of the said plurality of rays.

2. An apparatus according to claim 1, characterised in that the directing and focusing means includes means (36) for polarizing said probe beam.

3. An apparatus according to claim 2, characterised in that the photodetector (50) is adapted to measure the intensities of different rays of the probe beam and in operation said polarizing means (36) and analysing and detecting means (48,50) are adjusted so that the intensities of the different probe beam rays reaching the photodetector (50) are varied.

4. An apparatus according to claim 3, characterised in that said polarizing and said analysing and detecting means include respective rotatable means rotatable about an azimuthal angle with respect to the surface of the sample, said respective rotatable means being rotated in order to vary the intensities of the different probe beam rays reaching the photodetector (50).

5. An apparatus according to claim 4, characterised in that said polarizing and said analysing and detecting means are adjusted to minimize the intensities of the probe beam rays reaching the detector (50).

6. An apparatus according to claim 2, characterised in that said polarizing means includes a linear polarizer (302, 304, 306) and a compensator (315) to create elliptically polarized radiation having a known polarization state, and in that said analysing and detecting means includes a rotatable analyser (330) for detecting the linear polarization components in the probe beam.

7. An apparatus according to claim 1 or 2, characterised in that said photodetector (50) has an array of sensing elements (70, 72, 74, 76) located at different radial positions, each said sensing element (70, 72, 74, 76) generating a signal proportional to the light intensity falling thereon, and with the radial position of said elements (70, 72, 74, 76) corresponding to specific angles of incidence with respect to the surface of the sample of rays within the interacted probe beam.

8. An apparatus according to claim 2, characterised in that said directing and focusing means is such that the probe beam is focused to a spot size of about one micron or less in diameter on the surface of the sample.

9. An apparatus according to claim 2 , characterised by a means (340) for detecting the full power of the reflected probe beam, and in that said processor means (52) derives information about the parameters of the sample based upon both the polarization state of a ray in the reflected beam at a known angle of incidence and the full power of the reflected probe beam.

10. An ellipsometric method of use with a sample, comprising the steps of:

directing and focusing through a spherical lens (46) a probe beam of radiation having a known polarization state towards the surface of the sample so as to create a spread of angles of incidence with respect to the sample surface with the beam incident substantially symmetrically with respect to a normal to the surface of the sample;
gathering with said spherical lens (46) a plurality of rays in the probe beam after the beam has interacted with the sample;
analysing the polarisation state of and detecting the gathered rays; and
determining the angle of incidence with respect to the surface of the sample of each of the plurality of rays on the basis of the position of the ray in said probe beam, characterised by using as said spherical lens a lens (46) with a numerical aperture of at least 0.5 in such a manner as to tightly focus the probe beam and create a spread of angles of incidence with respect to the sample surface including the axial ray and all rays from the said axial ray out to at least 30° from the axial ray in two orthogonal axes;
and
evaluating parameters of the sample based on the polarization state of each of the said plurality of rays, the said plurality of rays including the axial ray and corresponding to a plurality of angles of incidence up to at least 30° from the normal to the surface of the sample; and in that the step of analysing and detecting includes imaging the interacted beam on a photodetector (50) by means of a further lens (336).

11. A method according to claim 10, characterised by the step of detecting the full power of the reflected probe beam,

and in that the step of evaluating further includes deriving information about the parameters of the sample based upon both the polarization state of a ray in the reflected beam at a known angle of incidence and the full power of the reflected probe beam.

12. A method according to claim 10, characterised in that the probe beam is focused to a spot size of about one micron or less in diameter on the surface of the sample.

**Patentansprüche**

1. Ellipsometrische Vorrichtung zur Verwendung mit einer Probe, wobei folgendes vorgesehen ist:

Mittel (32, 36, 38, 46), um einen Probenstrahl von Strahlung mit einem bekannten Polarisationszustand derart auf die Probe zu leiten und zu fokussieren, daß der Strahl im wesentlichen symmetrisch bezüglich einer Senkrechten zur Oberfläche auf die Probe auftrifft; und
Mittel (48, 50) zum Analysieren des Polarisationszustandes und zum Detektieren einer Vielzahl von Einzelstrahlen im Probenstrahl, nachdem der Strahl mit der Probe in Wechselwirkung getreten ist, wobei die Analyse- und Detektiermittel einen Photodetektor (50) aufweisen;
wobei die Leit- und Fokussiermittel eine sphärische Linse (46) aufweisen, und zwar zum Fokussieren des Probenstrahls und wobei die Analysemittel (48, 50) ferner den Einfallswinkel bezüglich der Oberfläche der Probe jedes einer Vielzahl von Einzelstrahlen bestimmen, und zwar auf der Basis der Position des Einzelstrahls in dem Probenstrahl,

dadurch **gekennzeichnet**, daß die erwähnte sphärische Linse (46) eine numerische Apertur von mindestens 0,5 besitzt und derart angeordnet ist, daß sie eine Spreizung der Einfallswinkel bewirkt, und zwar bezüglich der Probenoberfläche einschließlich des Axialeinzelstrahls und sämtlicher Einzelstrahlen von dem erwähnten Axialeinzelstrahl nach außen bis mindestens 30° gegenüber dem Axialeinzelstrahl in zwei orthogonalen Achsen,

daß die Analyse und Detektiermittel (48, 50) eine weitere Linse (336) aufweisen zum Abbilden des in Wechselwirkung getretenen Strahls auf den Photodetektor (50), und zwar derart, daß die Vielzahl von Einzelstrahlen den Axialeinzelstrahl umfaßt und einer Vielzahl von Einfallswinkeln bis zu mindestens 30° gegenüber der Normalen oder Senkrechten zur Oberfläche der Probe entspricht; und
daß Prozessormittel (52) vorgesehen sind zum Auswerten von Parameter der Probe basierend auf dem Polarisationszustand detektiert durch die Analyse und Detektiermittel (48, 50) jedes der Vielzahl von Einzelstrahlen.

2. Vorrichtung nach Anspruch 1, dadurch gekennzeichnet, daß die Leit- und Fokussiermittel Mittel (36) aufweisen zum Polarisieren des erwähnten Proben- oder Sondenstrahls.

3. Vorrichtung nach Anspruch 2, dadurch gekennzeichnet, daß der Photodetektor (50) geeignet ist, die Intensitäten der unterschiedlichen Einzelstrahlen des Probenstrahls zu messen, wobei im Betrieb die erwähnten Polarisiermittel (36) und die Analyse- und Detektiermittel (48, 50) derart eingestellt sind, daß die Intensitäten der unterschiedlichen Probenstrahl-Einzelstrahlen, die den Photodetektor (50) erreichen, verändert sind.

4. Vorrichtung nach Anspruch 3, dadurch gekennzeichnet, daß die Polarisier- und die erwähnten Analyse- und Detektiermittel entsprechend drehbare Mittel aufweisen, die um einen Azimuthwinkel bezüglich der Oberfläche der Probe verdrehbar sind, wobei die entsprechenden drehbaren Mittel gedreht werden, um die Intensitäten der den Photodetektor (50) erreichenden unterschiedlichen Proben- oder Sondenstrahleinzelstrahlen zu verändern.

5. Vorrichtung nach Anspruch 4, dadurch gekennzeichnet, daß die Polarisier- und die erwähnten Analyse- und Detektiermittel eingestellt sind, um die Intensitäten der den Detektor (50) erreichenden Sonden oder Probenstrahleinzelstrahlen zu minimieren.

6. Vorrichtung nach Anspruch 2, dadurch gekennzeichnet, daß die Polarisiermittel einen Linearpolarisator (302, 304, 306) aufweisen und einen Kompensator (315) zur Erzeugung einer elliptisch polarisierten Strahlung mit einem bekannten Polarisationszustand, und ferner dadurch gekennzeichnet, daß die Analyse- und Detektiermittel einen drehbaren Analysator (330) aufweisen zum Detektieren der Linearpolarisationskomponenten im Sonden- oder Probenstrahl.

**7.** Vorrichtung nach Anspruch 1 oder 2, dadurch gekennzeichnet, daß der Photodetektor (50) eine Anordnung von Abfühl- oder Sensorelementen (70, 72, 74, 76) aufweist, und zwar angeordnet an unterschiedlichen Radialpositionen, wobei jedes Abfühlelement (70, 72, 74, 76) ein Signal erzeugt, welches proportional zu der darauf einfallenden Lichtintensität ist, und wobei die Radialposition der Elemente (70, 72, 74, 76) speziellen Einfallswinkeln entspricht, und zwar bezüglich der Oberfläche der Probe von Einzelstrahlen innerhalb des in Wechselwirkung getretenen Sonden- oder Probenstrahls.

**8.** Vorrichtung nach Anspruch 2, dadurch gekennzeichnet, daß die Leit- und Fokussiermittel derart vorgesehen sind, daß der Probenstrahl auf eine Punktgröße von ungefähr 1 Mikron oder weniger im Durchmesser auf die Oberfläche der Probe fokussiert ist.

**9.** Vorrichtung nach Anspruch 2, gekennzeichnet durch Mittel (340) zum Detektieren der vollen Leistung des reflektierten Probenstrahls, ferner dadurch gekennzeichnet, daß die Prozessormittel (52) Information über die Parameter der Probe basierend auf sowohl dem Polarisationszustand des Einzelstrahls im reflektierten Strahl bei einem bekannten Einfallswinkel und der vollen Leistung des reflektierten Probenstrahls ableiten.

**10.** Ellipsometrisches Verfahren zur Verwendung mit einer Probe oder Sonde, wobei die folgenden Schritte vorgesehen sind:

Leiten und Fokussieren eines Probenstrahls von Strahlung mit einem bekannten Polarisationszustand durch eine sphärische Linse (46) zu der Oberfläche der Probe, um so eine Spreizung von Einfallswinkeln bezüglich der Probenoberfläche vorzusehen, wobei der Strahl im wesentlichen symmetrisch bezüglich einer Normalen oder Senkrechten zur Probenoberfläche einfällt;
Sammeln einer Vielzahl von Einzelstrahlen in dem Probenstrahl, nachdem der Strahl mit der Probe in Wechselwirkung getreten ist, mit der sphärischen Linse (46);
Analysieren des Polarisationszustandes und Detektieren der gesammelten Strahlen; und
Bestimmen des Einfallswinkels bezüglich der Oberfläche der Probe jedes der Vielzahl von Einzelstrahlen auf der Basis der Position des Einzelstrahls in dem erwähnten Probenstrahl gekennzeichnet durch die Verwendung einer Linse (46) als der sphärischen Linse, und zwar einer Linse (46) mit einer numerischen Apertur von mindestens 0,5 in der Weise, um so den Probenstrahl eng zu fokussieren und eine Spreizung von Einfallswinkeln bezüglich der Probenoberfläche zu schaffen, einschließlich des Axialeinzelstrahls und sämtlicher Einzelstrahlen von dem erwähnten Axialeinzelstrahlen nach außen bis zu mindestens 30° vom Axialeinzelstrahl in zwei orthogonalen Achsen, und
Auswerten von Parametern der Probe, basierend auf dem Polarisationszustand jedes der erwähnten Vielzahl von Einzelstrahlen, wobei die Vielzahl der Einzelstrahlen den Axialstrahl umfaßt und Strahlen entsprechend einer Vielzahl von Einfallswinkeln bis zu mindestens 30° gegenüber der Normalen zur Oberfläche der Probe; und ferner dadurch gekennzeichnet, daß der Schritt des Analysierens und des Detektierens das Abbilden des in Wechselwirkung getretenen Strahls auf einen Photodetektor (50) mittels einer weiteren Linse (36) umfaßt.

**11.** Verfahren nach Anspruch 10, gekennzeichnet durch den Schritt des Detektierens der vollen Leistung des reflektierten Probenstrahls und ferner dadurch gekennzeichnet, daß der Schritt des Auswertens ferner das Ableiten von Information über die Parameter der Probe umfaßt, und zwar basierend auf sowohl dem Polarisationszustand eines Einzelstrahls in dem reflektierten Strahl bei einem bekannten Einfallswinkel als auch der vollen Leistung des reflektierten Probenstrahls.

**12.** Verfahren nach Anspruch 10, dadurch gekennzeichnet, daß der Probenstrahl auf eine Punktgröße von ungefähr 1 Mikron oder weniger Durchmesser auf der Oberfläche der Probe fokussiert ist.

**Revendications**

**1.** Appareil ellipsométrique destiné à être utilisé avec un échantillon, comprenant :

des moyens (32, 36, 38, 46) permettant d'orienter et de focaliser un faisceau testeur de rayonnement ayant un état de polarisation connu sur l'échantillon de telle façon que le faisceau soit incident de manière sensiblement symétrique par rapport à une perpendiculaire à la surface de l'échantillon ; et

des moyens (48, 50) permettant d'analyser l'état de polarisation de, et de détecter, une pluralité de rayons dans le faisceau testeur après que le faisceau a réagi avec l'échantillon, les moyens d'analyse et de détection comportant un photodétecteur (50) ;

les moyens d'orientation et de focalisation comportant une lentille sphérique (46) permettant de focaliser le faisceau testeur, et lesdits moyens d'analyse (48, 50) fonctionnant en outre pour déterminer l'angle d'incidence par rapport à la surface de l'échantillon de chacun des rayons d'une pluralité de rayons en se fondant sur la position du rayon dans ledit faisceau testeur, caractérisé en ce que ladite lentille sphérique (46) présente une ouverture numérique d'au moins 0,5 et est agencée de façon à créer un déploiement d'angles d'incidence par rapport à la surface de l'échantillon et comprenant le rayon axial et tous les rayons provenant dudit rayon axial jusqu'à au moins 30° par rapport au rayon axial, en deux axe orthogonaux ; en ce que les moyens d'analyse et de détection (48, 50) comportent une autre lentille (336) permettant de rendre une image du faisceau ayant réagi, sur le photodétecteur (50) et qu'ils sont tels que ladite pluralité de rayons comporte le rayon axial et correspond à une pluralité d'angles d'incidence jusqu'à au moins 30° par rapport à la perpendiculaire à la surface de l'échantillon ; et en ce qu'un moyen de traitement (52) est fourni pour évaluer des paramètres de l'échantillon en se fondant sur l'état de polarisation détecté par lesdits moyens d'analyse et de détection (48, 50) de chaque rayon de ladite pluralité de rayons.

2. Appareil selon la revendication 1, caractérisé en ce que les moyens d'orientation et de focalisation comportent des moyens (36) permettant de polariser ledit faisceau testeur.

3. Appareil selon la revendication 2, caractérisé en ce que le photodétecteur (50) est conçu pour mesurer l'intensité de différents rayons du faisceau testeur et, en ce que, pendant le fonctionnement, lesdits moyens de polarisation (36) et les moyens d'analyse et de détection (48, 50) sont réglés de façon que l'intensité des différents rayons du faisceau testeur atteignant le photodétecteur (50) varie.

4. Appareil selon la revendication 3, caractérisé en ce que lesdits moyens de polarisation et lesdits moyens d'analyse et de détection comportent des moyens respectifs pouvant tourner qui tournent autour d'un angle azimutal par rapport à la surface de l'échantillon, lesdits moyens respectifs pouvant tourner tournant pour faire varier l'intensité des différents rayons du faisceau testeur atteignant le photodétecteur (50).

5. Appareil selon la revendication 4, caractérisé en ce que lesdits moyens de polarisation et lesdits moyens d'analyse et de détection sont réglés pour réduire au minimum l'intensité des rayons du faisceau testeur atteignant le détecteur (50).

6. Appareil selon la revendication 2, caractérisé en ce que lesdits moyens de polarisation comportent un polariseur linéaire (302, 304, 306) et un compensateur (315) pour créer un rayonnement polarisé de manière elliptique ayant un état de polarisation connu, et en ce que lesdits moyens d'analyse et de détection comportent un analyseur pouvant tourner (330) permettant de détecter les composants de polarisation linéaire dans le faisceau testeur.

7. Appareil selon la revendication 1 ou 2, caractérisé en ce que ledit photodétecteur (50) présente un groupement d'éléments de détection (70, 72, 74, 76) situé en différentes positions radiales, chacun desdits éléments de détection (70, 72, 74, 76) générant un signal proportionnel à l'intensité de la lumière qui tombe sur celui-ci, et la position radiale desdits éléments (70, 72, 74, 76) correspondant à des angles spécifiques d'incidence par rapport à la surface de l'échantillon de rayons à l'intérieur du faisceau testeur qui a réagi.

8. Appareil selon la revendication 2, caractérisé en ce que lesdits moyens d'orientation et de focalisation sont tels que le faisceau testeur est focalisé en un spot ayant un diamètre inférieur ou égal à un micron sur la surface de l'échantillon.

9. Appareil selon la revendication 2, caractérisé par des moyens (340) permettant de détecter la puissance totale du faisceau testeur réfléchi, et en ce que ledit moyen de traitement (52) déduit des information relatives aux paramètres de l'échantillon en se fondant sur, à la fois, l'état de polarisation d'un rayon dans le faisceau réfléchi selon un angle d'incidence connu et la puissance totale du faisceau testeur réfléchi.

10. Procédé ellipsométrique d'utilisation, avec un échantillon, comprenant les étapes suivantes :

orientation et focalisation, grâce à une lentille sphérique (46) d'un faisceau testeur de rayonnement ayant un état de polarisation connu vers la surface de l'échantillon de façon à créer un déploiement d'angles d'incidence par rapport à la surface de l'échantillon, le faisceau incident étant sensiblement symétrique par rapport à une perpendiculaire à la surface de l'échantillon ;

rassemblement, grâce à ladite lentille sphérique (46) d'une pluralité de rayons dans le faisceau testeur après que le faisceau a réagi avec l'échantillon ;

analyse de l'état de polarisation et détection des rayons rassemblés ; et

détermination de l'angle d'incidence par rapport à la surface de l'échantillon de chaque rayon de la pluralité de rayons en se fondant sur la position du rayon dans ledit faisceau testeur, caractérisé par l'utilisation comme dite lentille sphérique d'une lentille (46) ayant une ouverture numérique d'au moins 0,5 de façon à focaliser de manière serrée le faisceau testeur et créer un déploiement d'angles d'incidence par rapport à la surface de l'échantillon comportant le rayon axial et tous les rayons provenant dudit rayon axial jusqu'à au moins 30° par rapport au rayon axial, en deux axes orthogonaux ; et

évaluation des paramètres de l'échantillon en se fondant sur l'état de polarisation de chaque rayon de la pluralité de rayons, ladite pluralité de rayons comportant le rayon axial et correspondant à une pluralité d'angles d'incidence jusqu'à au moins 30° par rapport à la perpendiculaire à la surface de l'échantillon ; et en ce que l'étape d'analyse et de détection comporte le rendu d'une image du faisceau ayant réagi sur un photodétecteur (50) au moyen d'une autre lentille (336).

11. Procédé selon la revendication 10, caractérisé par l'étape consistant à détecter la puissance totale du faisceau testeur réfléchi, et en ce que l'étape d'évaluation comporte en outre la déduction d'informations relatives aux paramètres de l'échantillon en se fondant sur, à la fois, l'état de polarisation d'un rayon dans le faisceau réfléchi selon un angle d'incidence connu et la puissance totale du faisceau testeur réfléchi.

12. Procédé selon la revendication 10, caractérisé en ce que le faisceau testeur est focalisé en un spot de diamètre inférieur ou égal à un micron sur la surface de l'échantillon.

FIG. *1* PRIOR ART

FIG. *2*

FIG. 3

FIG. 4

FIG. 5

FIG. 6

FIG. 7